# EUROPÄISCHE PATENTSCHRIFT

(11) **EP 2 990 159 B1**
(45) Veröffentlichungstag und Bekanntmachung des Hinweises auf die Patenterteilung: **10.11.2021**
(21) Anmeldenummer: 15177203.5
(22) Anmeldetag: 17.07.2015
(51) Int. Cl.: B24C 1/04, B26F 3/00, B23Q 17/22, B24C 5/02, B26D 5/00

(54) **WASSERSTRAHL-SCHNEIDEINRICHTUNG**
WATER-JET CUTTING MACHINE
DISPOSITIF DE DECOUPE PAR JET D'EAU

(30) Priorität: 29.08.2014 AT 506002014
(43) Veröffentlichungstag der Anmeldung: 02.03.2016
(73) Patentinhaber: STM Stein-Moser GmbH, 5531 Eben im Pongau (AT); STM Waterjet AG, 6260 Reiden (CH)
(72) Erfinder: MOSER, Jürgen, 5500 Bischofshofen (AT)
(74) Vertreter: Wildhack & Jellinek

(56) Entgegenhaltungen:
- DE-A1- 10 144 718
- DE-A1-102004 060 271
- DE-U1- 29 812 433
- US-A1- 2001 027 708
- US-A1- 2006 040 590
- None

## Beschreibung

Die Erfindung betrifft eine Hochdruck- Wasserstrahl - Schneideinrichtung mit einem Sensor gebildet mit einem Tastteil und einem Schaltmittel für ein Steuersystem.

In einer Wasserstrahl-Schneideinrichtung wird Wasser mit einem Druck von bis 6000 bar und höher durch eine Düse gedrückt und ein gebündelter Wasserstrahl mit Überschallgeschwindigkeit gebildet, welcher Strahl Schaumstoff, Gummi, Dichtungen, Gewebe und dergleichen in beträchtlichen Dicken zu trennen vermag. Harte flächige Werkstoffe wie Glas, Metall, Verbundwerkstoffe, Steinplatten und dergleichen können gemäß dem Stand der Technik mit einem Abrasiv-Wasserstrahl geteilt werden. Dabei wird zur Erhöhung der kinetischen Energie dem Wasserstrahl nach der Wasserdüse Abrasivmaterial beigemengt.

Eine Beimengung erfolgt in einer Mischkammer, von welcher das Wasser-Abrasiv-Gemisch durch ein Fokussierrohr mit ca. doppelter Schallgeschwindigkeit auf ein Werkstück aufgebracht und dieses geteilt wird. Dieses Gemisch in üblicher Form schneidet bzw. schleift sich durch jedes Material mit einer Mohsschen Härte von ca. 8 und einer Dicke des Werkstückes von ca. 300 mm.

Wasserstrahl-Schneideinrichtungen haben zumeist eine horizontale Auflage für ein flächiges Werkstück und einen Schneidkopf mit einem vertikal aus einer Schneiddüse austretenden Schneidstrahl.

Die DE 298 12 433 U1 offenbart eine vertikal gesteuerte verfahrbare Wasserstrahl-Schneidmaschine gebildet aus einer Schneideinrichtung mit vertikaler Schneiddüse in fester Verbindung mit einer Steuereinrichtung mit einem Abtastarm. Der Abtastarm mit Gleitringen ist einerseits am Werkstück um den vertikal austretenden Wasserstrahl positioniert und andererseits mit einer Steuereinrichtung mit Mess-und Steuermittel verbunden.

Mittels des Abtastarmes erfolgt eine Feststellung des Abstandes der Schneiddüse vom Werkstück und ein Regeln dieser Distanz durch ein vertikales Verschieben der gesamten Wasserstrahl-Schneidmaschine in einer vertikalen Führung.

Voraussetzung für ein winkelgerechtes wirtschaftliches Trennen von flächigen Materialien sind jedoch die Parameter für eine Schneidstrahlbeaufschlagung des Werkstoffes und gegebenenfalls Präventionen zumindest von Teilen der eingangs genannten Schneideinrichtung.

Für eine Schneidkantenbildung mit gewünschten Winkeln in Dickenrichtung ist aufgrund einer üblichen Schneidstrahlerweiterung im Werkstück ein Schneidstrahlwinkel quer zur Schneidrichtung einzustellen, was mit verfügbaren Steuerprogrammen erfolgen kann.

Für eine hochwertige Ausbildung der Schnittfläche im Werkstück ist jedoch ein geringer Abstand des Fokussierrohres bzw. eines gebündelten Wasser-Abrasiv-Schneidstrahles von der Werkstückoberfläche von entscheidender Bedeutung. Eine genaue Messung und Steuerung der Distanz des austretenden Strahles zur Oberfläche des zu schneidenden Teiles soll daher zur Optimierung der Schnittgüte laufend im Schneidbetrieb erfolgen.

Weiter sind für eine oft gewünschte Seitenflächengeometrie der Werktücke Schnittkantenwinkel mit geringen Werten von beispielsweise 22° zu einer der Werkstückoberflächen erforderlich.

Letztlich ist eine Betriebssicherheit der Hochdruck-Wasserstrahl-Schneideinrichtung zu optimieren und bei Hindernissen in einer vorgesehenen Schneidstrahlausformung eine Prävention dahingehend vorzusehen, dass gegebenenfalls Schnellabschaltungen einer Schneidkopf- bzw. Fokussierrohr-Bewegung und/oder einer Schneidstrahlausbildung ausgelöst werden.

Es ist nun Ziel der vorliegenden Erfindung, eine Hochdruck-Wasserstrahl-Schneideinrichtung mit einem Sensor der eingangs genannten Art für ein Steuersystem zu definieren, welcher die Nachteile im Stand der Technik vermeidet und die Güte einer Schnittausbildung in flächigen Werkstücken auch bei geringen bzw. großen Kantenwinkeln fördert.

Weiter ist es Aufgabe der Erfindung, ein Verfahren zur Steuerung eines Abstandes zwischen einer Werkstückoberfläche und einem Fokussierrohr anzugeben, mit welchem eine umfassende Optimierung einer Schnitterzeugung und gegebenenfalls eine Prävention von Anlagenteilen erreicht werden.

Obiges Ziel der Erfindung wird bei einer Hochdruck-Wasserstrahl-Schneideinrichtung mit einem gattungsgemäßen Sensor erreicht, wobei der Sensor an der Halterung des Schneidkopfes festgelegt ist und ein der Festlegung gegenüber liegendes Tastteil als bewegbares Ringelement zur Feststellung des Abstandes zwischen Fokussierrohr und der Werkstückoberfläche auf diese hin anstellbar ist, wobei das Ringelement des Tastteiles als offenes Element gebildet ist und eine Aussparung von 60° bis 80° aufweist und durch eine seitliche, im Wesentlichen parallel zur Werkstückoberfläche gerichtete Belastung des Tastteiles durch ein Schaltmittel des Sensors eine Auslösung einer Abschaltung der Schneidkopfbewegung und/oder eine Abschaltung der Schneidstrahlbildung bewirkbar ist.

Die Vorteile eines derart ausgeformten Sensors sind insbesondere darin zu sehen, dass das Tastteil im Wesentlichen rund um das Fokussierrohr den Abstand des Schneidstrahles zur Werkstückoberfläche ermittelt. Es kann daher auch im Randbereich des flächigen Werkstückes oder im Grenzbereich zu Ausnehmungen aus diesem eine genaue Abstandsmessung, gegebenenfalls nur mit einem Bereich des Tastteiles und derart eine optimale Schnitterstellung mit hoher Wirtschaftlichkeit erfolgen.

Ebenso erheblich sind die Vorteile eines Schaltmittels des Sensors, welches unmittelbar eine Abschaltung der Schneidkopfbewegung und des Schneidstrahles bewirkt. Wird das Tastteil an der Werkstückoberfläche geführt oder zumindest zeitweise an diese angestellt, so können Erhebungen oder Fremdkörper darauf während der Schnitterstellung zu einer Stoßbelastung führen, welche das Schaltmittel des Sensors aktiviert. Dadurch können sowohl Brüche des Fokussierrohres, welches zumeist aus hartem und sprödem Material besteht, verhindert, als auch Verstellungen des Schneidkopfes hintangehalten werden.

Für eine genaue Distanzmessung im Langzeitbetrieb hat es sich als vorteilhaft herausgestellt, wenn das Ringelement des Tastteiles einen Innendurchmesser zwischen 30 mm und 50 mm bei einer Ringdicke von 4,0 mm bis 5,0 mm aufweist, aus korrosionsbeständigem Werkstoff gefertigt ist und stirnseitig zum Werkstück hin eine verschleißfeste Schicht trägt.

Erfindungsgemäß kann in vorteilhafter Weise vorgesehen sein, dass das Ringelement des Tastteiles des Sensors im Bereich der Aussparung einen Neigungswinkel des Schneidstrahles gegenüber der Werkstückoberfläche von bis zu 68° ermöglicht.

Die Öffnung im Ringelement des Tastteiles beeinflusst eine Funktion des Sensors zur Abstandsmessung zum Werkstück hin im Wesentlichen nicht nachteilig. Allerdings ist dadurch ein Bereich freigesetzt, in welchem das Fokussierrohr bei einer Schrägstellung zur Senkrechten der Werkstückoberfläche von bis ca. 68° geneigt positioniert werden kann, wodurch Werkstückkanten mit spitzen Winkeln von etwa 22° herstellbar sind.

Weiters von Bedeutung ist, dass der Sensor mit bewegbarem Tastteil und Schaltmittel ist in eine drehbaren Halterung festgelegt ist, in welcher ebenso der Schneidkopf angeordnet und mittels eines Zwei-Achsen-Drehgelenks bewegbar ist, wobei durch das Steuersystem eine Positionierung der drehbaren Halterung und eine 3D-Bewegung des Schneidkopfes derart einstellbar ist, dass der Auftreffpunkt des Schneidstrahles am Werkstück bei einer Bewegung des Schneidkopfes unverändert bleibt.

Insbesondere für eine Wasserstrahl-Schneideinrichtung mit einem 3D-Schneidkopf ist von besonderem Vorteil, wenn eine mittels Regelung gesteuerte Halterung einerseits den Sensor mit bewegbarem Tastteil und einem Schaltmittel trägt, in welcher Halterung andererseits der Schneidkopf mit der Maßgabe gelagert ist, dass dieser gesteuert drehbar ist, wobei der Auftreffpunkt des Schneidstrahles am Werkstück durch eine Bewegung des Schneidkopfes unverändert bleibt.

Ein STM 3D-48 Schneidkopf weist beispielsweise einen Neigungswinkel zum flächigen Werkstück bis 48° auf und hat ein Zwei-Achsen-Drehgelenk für einen Schnittwinkelfehlerausgleich und einen Fasenschnitt. Der Schneidkopf schwenkt mittels einer Roboterkinematik durch den sogenannten "Tool Center Point".

Eine Lösung der weiteren Aufgabe der Erfindung, ein Verfahren zur Steuerung eines Abstandes zwischen einer Werkstückoberfläche und einem Fokussierrohr anzugeben, mit welchem eine umfassende Optimierung einer Schnitterzeugung und eine Prävention von Anlagenteilen mittels eines Sensors erreicht wird, erfolgt dadurch, dass der Sensor aus einem ringförmigen, parallel zur Werkstückoberfläche ausgerichteten Tastteil, welches als offenes Ringelement mit einem Innendurchmesser zwischen 30 mm und 50 mm mit einer Aussparung von 60° bis 80° sowie mit einem Offset-Focus von 4 mm ausgeformt und einem Schaltmittel gebildet ist, wobei das Tastteil zur Messwerterfassung für eine dreidimensionale Steuerung der Lage des Fokussierrohres zumindest durch den Sensor auf die Werkstückoberfläche angestellt wird und das Schaltmittel des Sensors bei einer Belastung bzw. Bewegung des Tastteiles in einer Richtung im Wesentlichen parallel zur Werkstückoberfläche unmittelbar eine Schneidstrahlbildung und/oder eine Schneidkopfbewegung unterbricht bzw. abschaltet.

Das erfindungsgemäße Verfahren hat den Vorteil, dass mit einem Sensor einerseits eine Abstandserfassung des Fokussierrohrendes zur Werkstückoberfläche erfolgt und der Steuerung der Schneideinrichtung den Messwert zur Ein-oder Nachstellung einer Schneidstrahldistanz zuführt und andererseits eine Kollision des spröden Fokussierrohres mit einer Erhebung an der Werkstückoberfläche und dessen Bruch vermieden wird. Eine Abstandsmessung kann dabei permanent durch dauerndes Anstellen des Tastteiles an die Werkstückoberfläche durchgeführt werden oder, was bei rauen Oberflächen des zu schneidenden Teiles vorteilhaft sein kann, durch zeitweises Anstellen des Tastteiles erfolgen. Der Anstellweg des Tastteiles kann dabei bis zu 20 mm betragen, was eine Anhäufung von Abrasivmittel im Ringelement des Tastteiles weitgehend ausschließt.

Eine Unterbrechung der Schneidstrahlbildung und/oder ein Anhalten der Schneidkopfbewegung erfordern einen gewissen Zeitaufwand. Um sicher zu stellen, dass eine Kollision des Fokussierrohres oder von Teilen des Schneidkopfes durch von der Oberfläche des Werkstückes abstehende Teile in der Anhaltezeit vermieden wird, ist das Ringelement mit einem Innendurchmesser zwischen 30 mm und 50 mm ausgebildet.

Um eine bei einer Abstandsmessung des Tastteiles bei einer Schnittführung auch mit geringem Winkel des Schneidstrahles zur Werkstückoberfläche zu ermöglichen, kann vorgesehen sein, dass auf Grund der Messwerterfassung des Tastteiles das Fokussierrohr bzw. der Schneidstrahlaustritt im Schneidkopf auf eine Distanz von 3 mm ± 0.2 mm über die Werkstückoberfläche eingestellt wird und dass ein Winkel des Schneidstrahles zur Werkstückoberfläche im Bereich einer Aussparung des Ringelementes vom Tastteil auf einen Wert von gleich oder geringer als ca. 56° eingeregelt wird.

Als besonders günstig im praktischen Einsatz des Sensors nach der Erfindung hat sich eine Anstellung des Tastteiles an das Werkstück zumindest bei jeder Richtungsänderung des Schneidstrahles während der Profilierung des Schnittteiles herausgestellt, weil innere Spannungen im flächigen Werkstück Verwerfungen verursachen können, die im Sinne einer optimalen Schnittgüte in einer exakten Distanzierung bzw. Nachstellung des Fokussierrohres zu berücksichtigen sind.

Ein Ausführungsbeispiel der Erfindung, welches lediglich einen Technologieweg derselben darstellt" ist in den Zeichnungen gezeigt und wird nachfolgend beschrieben.

Es zeigen
Fig. 1 einen Sensor mit Schneidkopf in Ansicht
Fig. 2 einen Sensor mit Schneidkopf aus der Projektion von U von Fig. 1
Fig. 3 ein Tastteil eines Sensors
Fig. 4 eine Ansicht von Sensor und Fokussierrohr im Schneidkopf bei senkrechtem Schnitt (90° zur Werkstückoberfläche)

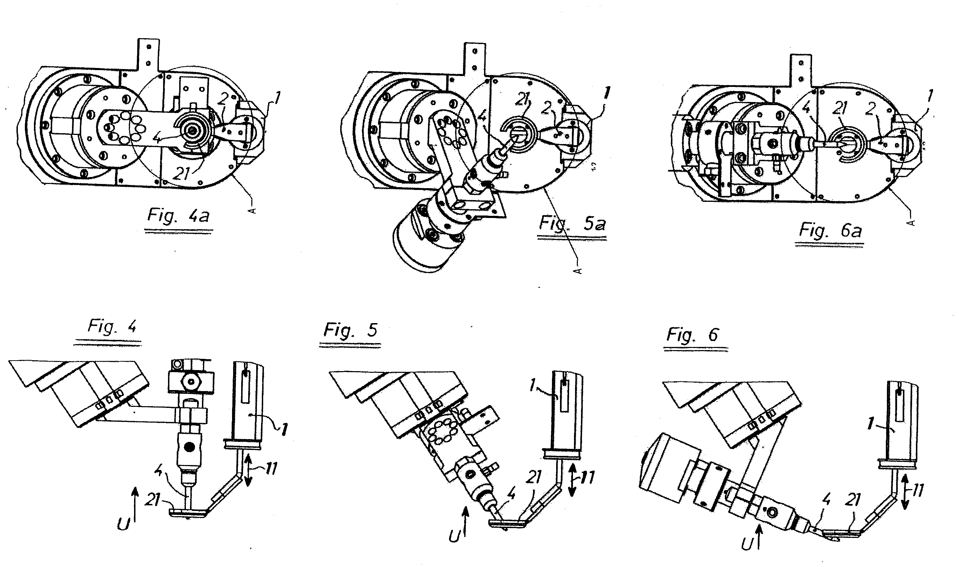

Fig. 4 a eine Ansicht von Fig. 4 aus der Projektion von U
Fig. 5 eine Ansicht von Sensor und Fokussierrohr im Schneidkopf bei einem Schneidstrahlwinkel von 34° zur Senkrechten der Werkstückoberfläche Fig. 5 a eine Ansicht von Fig. 5 aus der Projektion von U
Fig. 6 eine Ansicht von Sensor und Fokussierrohr im Schneidkopf bei einem Schneidstrahlwinkel von 68° zur Senkrechten der Werkstückoberfläche
Fig. 6 a eine Ansicht von Fig. 6 aus der Projektion von U

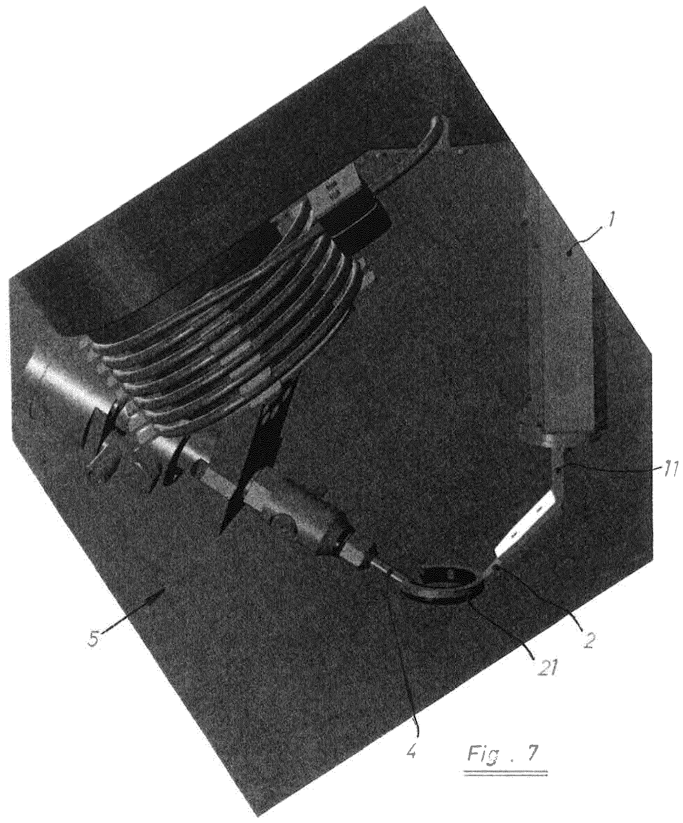

Fig. 7 bildliche Darstellung einer Hochdruck-Wasserstrahl-Schneideinrichtung mit einem Sensor gemäß der Erfindung

Eine Bezugszeichenliste soll die Zuordnung von Funktionsmittel und Teil in den Darstellungen erleichtern.

Es stellen dar:
- 1: Sensor
- 11: Anschlusselement vom Sensor
- 2: Tastteil
- 20: Festlegteil
- 21: Ringelement
- 22: Außendurchmesser des Ringelementes
- 23: Innendurchmesser des Ringelementes
- 24: Aussparwinkel
- 25: Aussparwinkel OF (Offset-Fokus-Winkel)
- 3: Schaltmittel
- 4: Fokussierrohr
- 5: Schneidkopf

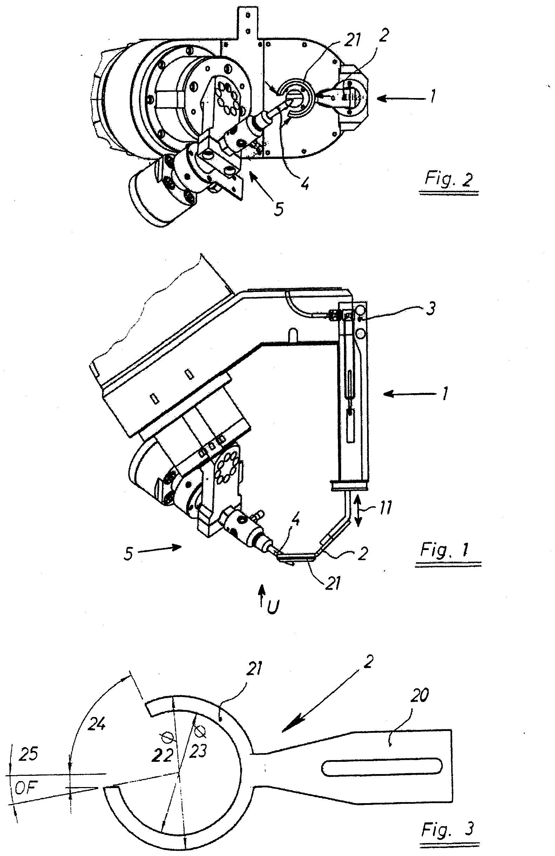

Aus Fig. 1 ist ein Sensor 1 gemäß der Erfindung in einer Hochdruck-Wasserstrahl-Schneideinrichtung zu entnehmen. Ein derartiger Sensor 1 weist ein bewegbares Anschlusselement 11 für ein Tastteil 2 mit einem Festlegteil 20 auf, welches Festlegteil 20 mit dem Anschlusselement vom Sensor 1 in Verbindung steht. Parallel zu einem flächigen Werkstück (nicht dargestellt) ist das Tastteil 2 mit einem Ringelement 21 ausgeformt, in dessen Zentrum bzw. Mittelpunkt ein Fokussierrohr 4 oder ein Schneidstrahl eines Schneidkopfes 5 positioniert ist.

Bei einer gesteuerten Drehung des Schneidkopfes 5 ändert sich der Winkel des Fokussierrohres 4 zur Werkstückoberfläche und somit der Kantenwinkel des Trennschnittes, wobei jedoch der Auftreffpunkt des Schneidstrahles auf dem Werkstück unverändert bleibt, wenn der Abstand erfindungsgemäß geregelt ist.

Weist die Oberfläche des Werkstückes bedeutsame spontane Erhebungen, beispielsweise Spannelemente im Randbereich, Verwerfungen durch Spannungen, Überlagerungen durch Ausschnittteile und dergleichen auf, welche bei einer Schnittführung eine Gefahr für bewegte Schneidkopfteile darstellen, so bewirken diese allenfalls einen Stoß parallel zur Werkstückoberfläche auf das Ringelement 21, welcher Stoß ein Schaltmittel 3 an Sensor 1 auslöst und dadurch die Bewegung des Schneidkopfes 5 und gegebenenfalls eine Schneidstrahlbildung aussetzt.

Zur Veranschaulichung der konstruktiven Maßnahme der Schneideinrichtung mit dem Sensor 1 zeigt Fig. 2 eine Projektion der Teile nach Fig. 1 aus der Ansicht von U.

In Fig. 3 ist ein Tastteil 2 mit einer Aussparung 24, 25 des Ringelementes 21 und einem Festlegteil 20 in Draufsicht dargestellt. Mit 25 wird eine OF (Offset Fokus)-Distanz bezeichnet, die den Abstand vom Mittelpunkt des Fokussierrohres 4 zum Beginn der Aussparung im Ringelement 21 kennzeichnet.

Eine Auflage (nicht dargestellt) am unteren, dem Werkstück gegenüberliegenden Teil des Ringelementes 21 weist eine verschleißfeste Schicht auf, welche eine Betriebssicherheit des Tastteiles 2 erhöht.

Ein übliches Ringelement 21 hat einen Innendurchmesser 23 von beispielsweise 38.0 mm und einen Außendurchmesser 22 von 47.0 mm.

Mittels dieser Dimensionierung des Innendurchmessers 23 des Ringelementes 21 kann bei üblichen Antrieben nach einer vom Schaltmittel 3 des Sensors 1 ausgelösten Abschaltung der Schnittführung mit einem Fokussierrohr 4, welches einen Außendurchmesser von 8 mm aufweist, ein Nachlauf mit einer Wegstrecke von bis zu 15 mm zerstörungsfrei erfolgen.

Fig. 4 zeigt im Zusammenhang mit Fig. 4 a einen Sensor 1 mit einer Anstellung 11 eines Ringelementes 21 bei im Wesentlichen senkrecht auf eine Werkstückoberfläche (nicht dargestellt) ausgerichtetem Fokussierrohr 4. Das Fokussierrohr 4 ist zentrisch im Ringelement 21 positioniert, so dass für geringe Neigungen eines Schneidstrahles dieses Element 21 auch geschlossen ausführbar ist.

In Fig. 5 im Zusammenhang mit Fig.5 a ist die Positionierung des Fokussierrohres 4 im Ringelement 21 bei einem Winkel eines Schneidstrahles zur Senkrechten der Werkstückoberfläche von ca. 34° geneigt, welche Winkeleinstellung durch eine Drehung des Schneidkopfes 5 erreicht wird. Dieser Winkel des Fokussierrohres 4 erfordert eine Aussparung 25 vom Ringelement 21 des Tastteiles 2, was aus Fig. 5 deutlich hervorgeht.

Bei einer weiteren Drehung des Schneidkopfes 5, wie dies in Fig. 6 und Fig. 6a gezeigt ist, wird ein kleinster Winkel der Fokussierrohraxe 4 zur Oberfläche des Werkstückes von 22° erreicht. Bei dieser Winkeleinstellung des Schneidstrahles ist, wie aus Fig. 6 a deutlich hervorgeht, eine Aussparung 24 und eine OF-Distanz 25 erforderlich, um eine sichere Funktion des Sensors 1 mit dem Tastteil 2 und dem Ringelement 21 sicherzustellen.

## Patentansprüche

1. Hochdruck-Wasserstrahl-Schneideinrichtung mit einem Sensor (1) gebildet mit einem Tastteil (2) und einem Schaltmittel (3) für ein Steuersystem, wobei der Sensor (1) an der Halterung des Schneidkopfes (5) festgelegt ist und ein der Festlegung gegenüber liegendes Tastteil (2) als bewegbares Ringelement (21) zur Feststellung des Abstandes zwischen Fokussierrohr (4) und der Werkstückoberfläche auf diese hin anstellbar ist und durch eine seitliche, im Wesentlichen parallel zur Werkstückoberfläche gerichtete Belastung des Tastteiles (2) durch das Schaltmittel (3) des Sensors (1) eine Auslösung einer Abschaltung der Schneidkopfbewegung und/oder eine Abschaltung der Schneidstrahlbildung bewirkbar ist, **dadurch gekennzeichnet, dass** das Steuersystem mittels eines in einer Halterung dreidimensional bewegbaren Schneidkopfes (5) eine Einstellung eines Auftreffpunktes des Schneidstrahles am Werkstück gezielt regelt, und das Ringelement (21) des Tastteiles (2) als offenes Element gebildet ist und eine Aussparung (24) von 60° bis 80° aufweist.

2. Hochdruck-Wasserstrahl-Schneideinrichtung nach Anspruch 1, **dadurch gekennzeichnet, dass** das offene Ringelement (21) des Tastteiles (2) des Sensors (1) einen Innendurchmesser (23) zwischen 30 mm und 50 mm aufweist.

3. Hochdruck-Wasserstrahl-Schneideinrichtung nach Anspruch 1 oder 2, **dadurch gekennzeichnet, dass** im Bereich der Aussparung (24,25) des Tastteiles (2) des Sensors (1) der Neigungswinkel des Schneidstrahles gegenüber der Werkstückoberfläche von bis zu 68° einstellbar ist.

4. Hochdruck-Wasserstrahl-Schneideinrichtung nach Anspruch 1 bis 3, **dadurch gekennzeichnet, dass** das Ringelement (21) des Tastteiles (2) des Sensors (1) aus korrosionsfestem Werkstoff gefertigt ist oder an der dem Werkstück gegenüber liegenden Seite eine verschleißfeste Schicht trägt.

5. Verfahren zur Steuerung eines Abstandes zwischen einer Werkstückoberfläche und einem Fokussierrohr (4) eines Schneidstrahles in einem Schneidkopf (5) sowie einer Prävention eines Fokussierrohrbruches und/oder einer Schneidkopfverstellung mittels eines Sensors (1) im Steuersystem einer Hochdruck-Wasserstrahl-Schneideinrichtung, wobei der Sensor (1) aus einem ringförmigen, parallel zur Werkstückoberfläche ausgerichteten Tastteil (2), welches als offenes Ringelement (21) mit einem Innendurchmesser (22, 23) zwischen 30 mm und 50 mm mit einer Aussparung (24) von 60° bis 80° sowie mit einem Offset-Focus (25) von 4 mm ausgeformt und einem Schaltmittel (3) gebildet ist, wobei das Tastteil (2) zur Messwerterfassung für eine dreidimensionale Steuerung der Lage des Fokussierrohres (4) zumindest zeitweise durch den Sensor (1) auf die Werkstückoberfläche angestellt wird und das Schaltmittel (3) des Sensors (1) bei einer Belastung bzw. Bewegung des Tastteiles (2) in einer Richtung im Wesentlichen parallel zur Werkstückoberfläche unmittelbar eine Schneidstrahlbildung und/oder eine Schneidkopfbewegung unterbricht bzw. abschaltet.

6. Verfahren nach Anspruch 5, **dadurch gekennzeichnet, dass** auf Grund der Messwerterfassung des Tastteiles (2) das Fokussierrohr (4) bzw. der Schneidstrahlaustritt im Schneidkopf (5) auf eine Distanz von 3 mm ± 0.2 mm über die Werkstückoberfläche eingestellt wird und dass ein Winkel des Schneidstrahles zur Werkstückoberfläche im Bereich einer Aussparung (24,25) des Ringelementes (21) vom Tastteil (2) auf einen Wert von gleich oder geringer als ca. 56° eingeregelt wird.

7. Verfahren nach einem der Ansprüche 5 oder 6, **dadurch gekennzeichnet, dass** eine Anstellung des Tastteiles (2) an die Werkstückoberfläche für eine Abstandsermittlung des Fokussierrohres (4) zum Werkstück mindestens bei jeder Winkeländerung des Schneidstrahles erfolgt.

## Claims

1. High pressure water-jet cutting machine designed with a sensor (1) with a sensing component (2) and a switching means (3) for a control system, wherein the sensor (1) is fixed to the cutting head (5) mounting and a sensing component (2) located opposite the mounting is adjustable towards the latter as a movable annular element (21) in order to determine the distance between the focussing tube (4) and the workpiece surface and, by means of a lateral loading, which is substantially parallel to the workpiece surface, of the sensing component (2) by the switching means (3) of the sensor (1), a deactivation of the cutting head movement and/or a deactivation of the cutting jet formation can be triggered, **characterised in that** the control system controls a setting of an impact point of the cutting jet on the workpiece in a targeted manner by means of a cutting head (5), which is movable in three dimensions in a mounting, and the annular element (21) of the sensing component (2) is designed as an open element and has a recess (24) of 60° to 80°.

2. High pressure water-jet cutting machine according to claim 1, **characterised in that** the open annular element (21) of the sensing component (2) of the sensor (1) has an inner diameter (23) of between 30 mm and 50 mm.

3. High pressure water-jet cutting machine according to claim 1 or 2, **characterised in that** in the region of the recess (24,25) of the sensing component (2) of the sensor (1), the angle of inclination of the cutting jet relative to the workpiece surface is adjustable by up to 68°.

4. High pressure water-jet cutting machine according to claim 1 to 3, **characterised in that** the annular element (21) of the sensing component (2) of the sensor (1) is made from corrosion-resistant material or has a wear-resistant coating on the side opposite the workpiece.

5. Method for controlling a distance between a workpiece surface and a focussing tube (4) of a cutting jet in a cutting head (5) as well as prevention of a focussing tube fracture and/or a cutting head adjustment by means of a sensor (1) in the control system of a high pressure water-jet cutting machine, wherein the sensor (1) is formed from a ringshaped sensing component (2) oriented parallel to the workpiece surface, which is designed as an open annular element (21) with an inner diameter (22, 23) of between 30 mm and 50 mm with a recess (24) of 60° to 80° as well as with an offset focus (25) of 4 mm and a switching means (3), wherein the sensing component (2) is deployed for data acquisition for three-dimensional control of the position of the focussing tube (4), at least temporarily, by the sensor (1) on the workpiece surface and the switching means (3) of the sensor (1) immediately interrupts and/or deactivates a cutting jet formation and/or a cutting head movement in the event of a loading and/or movement of the sensing component (2) in a direction substantially parallel to the workpiece surface.

6. Method according to claim 5, **characterised in that,** on the basis of the data acquisition of the sensing component (2), the focussing tube (4) and/or the cutting jet exit within the cutting head (5) is set to a distance of 3 mm ± 0.2 mm above the workpiece surface and that an angle of the cutting jet to the workpiece surface in the region of a recess (24,25) of the annular element (21) is adjusted by the sensing component (2) to a value of approx. 56° or less.

7. Method according to any of claims 5 or 6, **characterised in that** a deployment of the sensing component (2) on the workpiece surface for determining the distance of the focussing tube (4) to the workpiece takes place at least on each angular change of the cutting jet.

## Revendications

1. Dispositif de découpe par jet d'eau à haute pression avec un capteur (1) formé avec une partie de sondage (2) et un moyen de commutation (3) pour un système de commande, dans lequel le capteur (1) est fixé au support de la tête de découpe (5) et une partie de sondage (2) opposée à la fixation peut être placée comme élément annuaire (21) mobile pour la fixation de la distance entre le tube de concentration (4) et la surface de pièce sur celle-ci et un déclenchement d'un arrêt du mouvement de tête de découpe et/ou un arrêt de la formation de jet de découpe peut être provoqué par une sollicitation latérale dirigée sensiblement parallèlement à la surface de pièce de la partie de sondage (2) par le moyen de commutation (3) du capteur (1), **caractérisé en ce que** le système de commande régule de manière ciblée au moyen d'une tête de découpe (5) mobile dans un support en trois dimensions un réglage d'un point d'impact du jet de découpe sur la pièce, et l'élément annulaire (21) de la partie de sondage (2) est formé comme élément ouvert et présente un évidement (24) de 60° à 80°.

2. Dispositif de découpe par jet d'eau à haute pression selon la revendication 1, **caractérisé en ce que** l'élément annulaire (21) ouvert de la partie de sondage (2) du capteur (1) présente un diamètre intérieur (23) entre 30 mm et 50 mm.

3. Dispositif de découpe par jet d'eau à haute pression selon la revendication 1 ou 2, **caractérisé en ce que** l'angle d'inclinaison du jet de découpe peut être réglé par rapport à la surface de pièce jusqu'à 68° dans la zone de l'évidement (24, 25) de la partie de sondage (2) du capteur (1).

4. Dispositif de découpe par jet d'eau à haute pression selon la revendication 1 à 3, **caractérisé en ce que** l'élément annulaire (21) de la partie de sondage (2) du capteur (1) est fabriqué en matériau résistant à la corrosion ou porte une couche résistante à l'usure sur le côté opposé à la pièce.

5. Procédé de commande d'une distance entre une surface de pièce et un tube de concentration (4) d'un jet de découpe dans une tête de découpe (5) ainsi qu'une prévention d'une rupture de tube de concentration et/ou un réglage de tête de découpe au moyen d'un capteur (1) dans le système de commande d'un dispositif de découpe par jet d'eau à haute pression, dans lequel le capteur (1) est formé d'une partie de sondage (2) annulaire orientée parallèlement à la surface de pièce qui est moulée comme élément annulaire (21) avec un diamètre intérieur (22, 23) entre 30 mm et 50 mm avec un évidement (24) de 60° à 80° ainsi qu'avec un focus de déport (25) de 4 mm et d'un moyen de commutation (3), dans lequel la partie de sondage (2) est placée pour la détection de valeur de mesure pour une commande en trois dimensions de la position du tube de concentration (4) au moins temporairement par le capteur (1) sur la surface de pièce et le moyen de commutation (3) du capteur (1) interrompt ou arrête lors d'une sollicitation ou d'un mouvement de la partie de sondage (2) dans une direction sensiblement parallèle à la surface de pièce directement une formation de jet de découpe et/ou un mouvement de tête de découpe.

6. Procédé selon la revendication 5, **caractérisé en ce que** sur la base de la détection de valeur de mesure de la partie de sondage (2) le tube de concentration (4) ou la sortie de jet de découpe dans la tête de découpe (5) est réglée à une distance de 3 mm ± 0,2 mm sur la surface de pièce et qu'un angle du jet de découpe à la surface de pièce est régulé dans la zone d'un évidement (24, 25) de l'élément annulaire (21) par la partie de sondage (2) à une valeur égale ou inférieure à environ 56°.

7. Procédé selon la revendication 5 ou 6, **caractérisé en ce qu'**un placement de la partie de sondage (2) sur la surface de pièce est effectué pour une détermination de distance du tube de concentration (4) par rapport à la pièce au moins pour chaque modification angulaire du jet de découpe.
